# EUROPEAN PATENT APPLICATION

(11) **EP 4 553 566 A1**
(43) Date of publication of application: **14.05.2025**
(21) Application number: 23834572.2
(22) Date of filing: 06.06.2023
(51) Int. Cl.: G02F 1/015, G02F 1/025

(54) **SILICON OPTICAL MODULATOR**

(30) Priority: 07.07.2022 CN 202210847124
(71) Applicant: Picmore Technology (Suzhou) Ltd., Suzhou, Jiangsu 215000 (CN)
(72) Inventor: JI, Mengxi, Suzhou, Jiangsu 215126 (CN); LI, Xianyao, Suzhou, Jiangsu 215126 (CN); SUN, Yuzhou, Suzhou, Jiangsu 215126 (CN)
(74) Representative: Kurig, Thomas
(86) International application number: PCT/CN2023/098528
(87) International publication number: WO 2024/007798

(57) **Abstract**

The present invention discloses a silicon optical modulator. The silicon optical modulator comprises a substrate, a first insulating layer, a doped layer and a second insulating layer which are stacked from bottom to top. The doped layer comprises a first flat region, a projecting strip region and a second flat region which are sequentially arranged in a left-right direction. The first flat region has a first side portion and a second side portion, wherein the first side portion is connected to the first flat region to form a first conductive region of the doped layer, the second side portion is connected to the first flat region to form a second conductive region of the doped layer, and the first side portion and the second side portion are connected to form a junction capacitor of the doped layer. The silicon optical modulator further comprises a covering strip which is located above the projecting strip region and covers the connecting face between the first side portion and the second side portion. The refractive index of the covering strip is larger than the refractive index of the second insulating layer and the refractive index of the first insulating layer. In this way, the covering strip is arranged to significantly reduce the optical loss of a waveguide without compromising the modulation efficiency, so as to increase the electro-optic bandwidth as much as possible.

## Description

This application claims the priority benefit of China application serial no. 202210847124.8, filed on July 7, 2022 and entitled "SILICON OPTICAL MODULATOR". The entirety of the above-mentioned patent application is hereby incorporated by reference herein and made a part of this specification.

### Technical Field

The present invention belongs to the field of semiconductor technology, and specifically relates to a silicon optical modulator.

### Background

Optical waveguide devices, such as electro-optic modulators, are one of the core devices in optical interconnection and optical communication, and are used to convert electrical signals into optical signals. Electro-optic modulators can be combined with laser, detectors, and other wavelength division multiplexing devices to form a complete functional transmission module and are widely applicable to data centers and backbone networks.

Silicon-based electro-optic modulators have been implemented on various silicon substrates and hybrid silicon substrates, such as the silicon-on-insulator substrate (SOI). Silicon-based electro-optic modulators employ the modulation mechanism based on the plasma dispersion effect, that is, an externally-applied voltage alters the carrier concentration in the waveguide, thereby inducing a change in the effective refractive index of the waveguide to achieve phase modulation.

Carrier-depletion silicon-based electro-optic modulators are widely used modulators that can achieve high-speed modulation. Their electro-optic bandwidth largely depends on the junction capacitor of the PN junction in the waveguide structure and the resistance value of the series-connected resistors.

For instance, the electro-optic bandwidth may be enhanced by decreasing the junction capacitor of the PN junction. However, the magnitude of the junction capacitor of the PN junction is closely related to the modulation efficiency of the modulator, which is generally difficult to reduce.

For instance, the electro-optic bandwidth may be enhanced by reducing the resistance value of the series-connected resistors. Specifically, the resistance value of the series-connected resistors may be reduced by (a) increasing the doping concentration of the flat region and (b) decreasing the distance between the edge of the medium- to highly-doped region and the projecting strip region. However, both methods (a) and (b) mentioned above will more or less increase the optical loss of the modulator.

In particular, in the next-generation single-wavelength 100 Gbaud and above application environments, the bandwidth of electro-optic modulators faces significant challenges.

Therefore, how to effectively reduce optical loss, avoid adverse effects on modulation efficiency, and thereby enable the electro-optic bandwidth to be enhanced as much as possible, is an urgent and important problem to be solved.

### SUMMARY OF THE INVENTION

### Technical Problems

To solve the problems in the related art, the present invention aims to provide a silicon optical modulator.

### Technical Solutions

To achieve the above, an embodiment provides a silicon optical modulator including a substrate, a first insulating layer, a doped layer, and a second insulating layer stacked from bottom to top.

The doped layer includes a first flat region, a projecting strip region, and a second flat region sequentially arranged in a left-right direction.

The projecting strip region has a first side portion and a second side portion, the first side portion is connected to the first flat region to form a first conductive region of the doped layer, the second side portion is connected to the first flat region to form a second conductive region of the doped layer, and the first side portion and the second side portion are connected to form a junction capacitor of the doped layer.

The silicon optical modulator further includes a covering strip located above the projecting strip region and covering a connecting face between the first side portion and the second side portion, and a refractive index of the covering strip is greater than a refractive index of the second insulating layer and a refractive index of the first insulating layer.

Preferably, the covering strip is left-right symmetrical with the connecting face between the first side portion and the second side portion as a mirror surface.

Preferably, a width of the covering strip in the left-right direction is not less than 1/10 of a width of the projecting strip region in the left-right direction.

Preferably, two ends of the covering strip in the left-right direction are aligned with two ends of the projecting strip region or extend beyond the two ends of the projecting strip region.

Preferably, the covering strip includes width-varying regions and a width-constant region, the width-varying regions are located at two ends of the covering strip in a length direction, the width-constant region is located between the width-varying regions, and each width-varying region gradually decreases in width from an end adjacent to the width-constant region to an edge end of the covering strip.

Preferably, in an up-down direction, a thickness of the covering strip is 1 to 500 nm, a thickness of the projecting strip region is 100 to 500 nm, and a thicknesses of the first flat region and a thickness of the second flat region are 1/10 to 4/5 of the thickness of the projecting strip region.

Preferably, a spacing between the covering strip and an upper surface of the projecting strip region in an up-down direction is 0 to 500 nm, and
when the spacing is not 0, a space between the covering strip and the upper surface of the projecting strip region is filled with a portion of the second insulating layer.

Preferably, the second insulating layer and/or the first insulating layer is made of silicon dioxide, and
the covering strip is made of polycrystalline silicon, amorphous silicon, single crystal silicon, or silicon nitride.

Preferably, the first conductive region is a P-type conductive region, and the second conductive region is an N-type conductive region.

Preferably, the P-type conductive region includes a P-type doped region constituting the first side portion and a P-type medium-doped region and a P-type highly-doped region located in the first flat plate region, and the P-type doped region, the P-type medium-doped region, and the P-type highly-doped region are sequentially connected in the left-right direction and doping concentrations increase sequentially.

The N-type conductive region includes a N-type doped region constituting the second side portion and a N-type medium-doped region and a N-type highly-doped region located in the second flat plate region, and the N-type doped region, the N-type medium-doped region, and the N-type highly-doped region are sequentially connected in the left-right direction and doping concentrations increase sequentially.

### Beneficial Effects

Compared to the related art, the technical effects of the present invention lie in: for the same doped layer, by adding a covering strip compared to without a covering strip, the optical loss of the doped layer is significantly reduced, and the modulation efficiency basically is not adversely affected, so as to increase the electro-optic bandwidth as much as possible. For instance, the covering strip lowers the optical loss, so that the resistance value of the series-connected resistors of the doped layer can be decreased as much as possible by, for example, increasing the doping concentrations of the flat regions, reducing the spacing between the medium- to highly-doped regions and the edge of the projecting strip region, etc., and the effect of enhancing the electro-optic bandwidth as much as possible is thus achieved without adverse effects.

### BRIEF DESCRIPTION OF THE DRAWINGS

FIG. 1 is a cross-sectional schematic view of a silicon optical modulator according to an embodiment of the present invention.
FIG. 2 is a cross-sectional structural view of a doped layer and a covering strip of the silicon optical modulator according to an embodiment of the present invention, where the structure of the doped layer based on a configuration angle is shown.
FIG. 3 is a top view of the structure of the doped layer and the covering strip of the silicon optical modulator according to another embodiment of the present invention.
FIG. 4 is another cross-sectional structural view of the doped layer and the covering strip of the silicon optical modulator according to an embodiment of the present invention, where the structure of the doped layer based on a composition angle is shown.
FIG. 5 is another cross-sectional structural view of the doped layer and the covering strip of the silicon optical modulator according to a variant embodiment of the present invention, where the structure of the doped layer based on the composition angle is shown.

### EMBODIMENTS OF THE INVENTION

The present invention will be described in detail below with reference to the specific embodiments shown in the accompanying figures. However, these embodiments do not limit the present invention, and the structural, method, or functional transformations made by a person having ordinary skill in the art according to these embodiments are all included in the protection scope of the present invention.

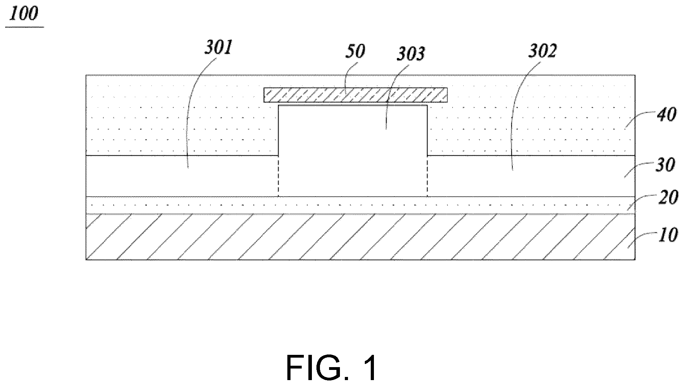

With reference to FIG. 1, an embodiment of the present invention provides a silicon optical modulator 100, which may be exemplified as a carrier-depletion silicon-based electro-optic modulator.

In this embodiment, the silicon optical modulator 100 includes a substrate 10, a first insulating layer 20, a doped layer 30, a second insulating layer 40, and a covering strip 50.

The substrate 10, the first insulating layer 20, the doped layer 30, and the second insulating layer 40 are stacked sequentially in a first direction. In the present application, a position of the substrate 10 relative to the doped layer 30 is generally defined as "lower", and a position of the doped layer 30 relative to the substrate 10 is defined as "upper", that is, the first direction defines an up-down direction. Correspondingly, the substrate 10, the first insulating layer 20, the doped layer 30, and the second insulating layer 40 are stacked sequentially from bottom to top.

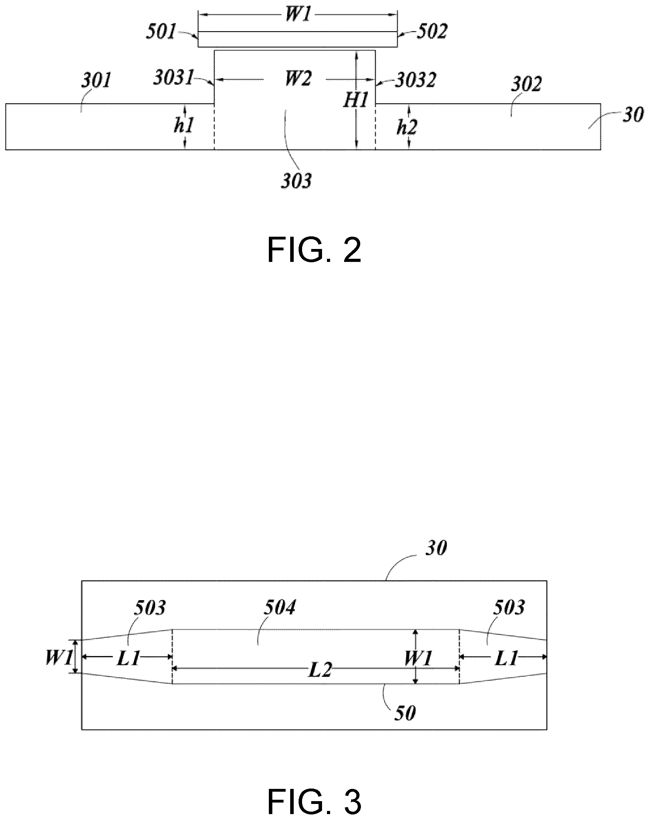

With reference to FIG. 2, the doped layer 30 includes a first flat region 301, a projecting strip region 303, and a second flat region 302 arranged sequentially in a second direction. The projecting strip region 303 protrudes away from the substrate 10 in the first direction from the first flat region 301 and the second flat region 302. The second direction is perpendicular to the first direction, and in the present application, a left-right direction is defined by the second direction. Correspondingly, the first flat region 301 and the second flat region 302 are located on the left and right sides of the projecting strip region 303, respectively.

Optionally, the first flat region 301, the projecting strip region 303, and the second flat region 302 may all be arranged on an upper surface of the first insulating layer 20, and the lower surfaces of the three are coplanar. A thickness H1 of the projecting strip region 303 in the up-down direction is greater than a thickness h1 of the first flat region 301 in the up-down direction and greater than a thickness h2 of the second flat region 302 in the up-down direction.

For instance, the thickness H1 of the projecting strip region 303 in the up-down direction may be 100 to 500 nm, the thickness h1 of the first flat region 301 in the up-down direction may be 1/10 to 4/5 of H1, and the thickness h2 of the second flat region 302 in the up-down direction may also be 1/10 to 4/5 of H1. In this embodiment, h1 is equal to h2, that is, the first flat region 301 and the second flat region 302 have the same thickness, and their upper surfaces are also coplanar. Certainly, the values of thicknesses H1, h1, and h2 are not limited to the above.

In addition, optionally, the width of the first flat region 301 in the left-right direction may be equal to the width of the second flat region 302 in the left-right direction.

It may be noted that in the present application, the doped layer 30 is divided into the first flat region 301, the projecting strip region 303, and the second flat region 302 according to the different heights of the upper surface, and a junction (refer to the left dashed line in FIG. 2) between the first flat region 301 and the projecting strip region 303 and a junction (refer to the right dashed line in FIG. 2) between the second flat region 302 and the projecting strip region 303 are illustrated by dashed lines in the figure. However, the doped layer 30 may be an integrated structure.

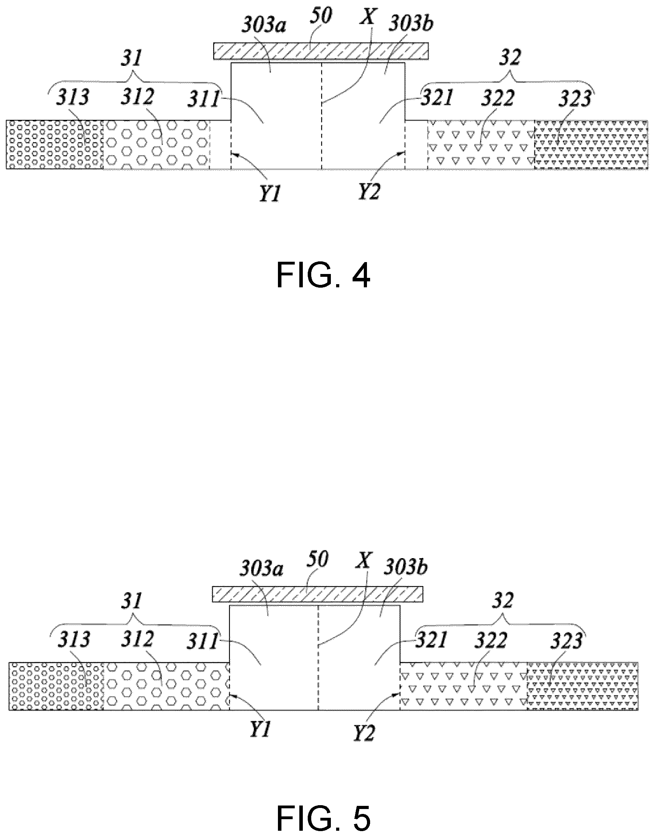

With referenced to FIG. 2 and FIG. 4, the projecting strip region 303 has a first side portion 303a and a second side portion 303b arranged side by side in the left-right direction.

The first side portion 303a is connected to the first flat region 301, and together they constitute a first conductive region 31 of the doped layer 30. For instance, the first conductive region 31 may be a P-type conductive region 31 made of monocrystalline silicon or polysilicon doped with impurities such as boron, aluminum, gallium, or indium. The second side portion 303b is connected to the second flat region 302, and together they constitute a second conductive region 32 of the doped layer 30. For instance, the second conductive region 32 may be an N-type conductive region 32 made of monocrystalline silicon or polysilicon doped with impurities such as phosphorus or arsenic. The first side portion 303a and the second side portion 303b are connected and form a junction capacitor of the doped layer 30, for example, forming a PN junction. A connecting face X between the first side portion 303a and the second side portion 303b constitutes an interface of the PN junction.

In the present application, the covering strip 50 is located above the projecting strip region 303 and covers the connecting face X between the first side portion 303a and the second side portion 303b, and a refractive index of the covering strip 50 is greater than a refractive index of the second insulating layer 40 and a refractive index of first insulating layer 20. In this way, for the same doped layer 30, by adding the covering strip 50, the optical loss of the doped layer 30 can be significantly reduced, and the modulation efficiency may basically not be adversely affected.

For instance, through simulation experiments, it is found that for the same doped layer 30, when the covering strip 50 is added as in this embodiment, a light field confinement factor in a depletion region of the junction capacitor (e.g., the projecting strip region 303) of the doped layer 30 is substantially unchanged compared to the case without the covering strip 50. By calculation, the modulation efficiency may decrease by no more than 1% or may not decrease at all. Further, the light field confinement factor outside the depletion region of the junction capacitor of the doped layer 30 has a relatively significant reduction, and the optical loss is reduced by nearly 20%.

Herein, the above effect is simply analyzed in principle: for the doped layer, the light field leaking from the junction capacitor to series-connected resistors (e.g., the first flat region 301 and the second flat region 302) cannot produce any modulation effect, but it causes optical loss. In the present application, by arranging the covering strip 50 with a higher refractive index than that of the second insulating layer 20 and that of the first insulating layer 40, the entire light field distribution exhibits an upward change, and the light field leaking to the series-connected resistors is weakened, so optical loss is significantly reduced and basically does not have a negative impact on the modulation efficiency.

In an embodiment, the covering strip 50 is left-right symmetrical with the connecting face X between the first side portion 303a and the second side portion 303b as a mirror surface. As such, for the same doped layer 30, when the covering strip 50 is added as in the present embodiment, compared with the absence of the covering strip 50, it can be ensured that the overall light field basically remains lifted from bottom to top without being accompanied by a left-right deviation.

With reference to FIG. 2 a width W1 of the covering strip 50 in the left-right direction is not less than 1/10 of a width W2 of the projecting strip region 303 in the left-right direction. For instance, two ends 501 and 502 of the covering strip 50 in the left-right direction may be aligned with two ends 3031 and 3032 of the projecting strip region 303, respectively, in which case the width W1 is equal to the width W2. Alternatively, two ends 501 and 502 of the covering strip 50 in the left-right direction, as illustrated in FIG. 2, may extend beyond the two ends 3031 and 3032 of the projecting strip region 303, respectively. For instance, one end 501 of the covering strip 50 may extend beyond the end 3031 of the projecting strip region 303 toward the left side of the figure, one end 502 of the covering strip 50 may extend beyond the other end 3032 of the projecting strip region 303 toward the right side of the figure, and in which case the width W1 is greater than the width W2. Certainly, positional relationships between the two ends 501 and 502 of the covering strip 50 and the two ends 3031 and 3032 of the projecting strip region 303 as well as a size relationship between the width W1 and the width W2 are not limited thereto.

In another embodiment, as shown in FIG. 3, the covering strip 50 includes width-varying regions 503 and a width-constant region 504, The width-varying regions 503 are located at two ends of the covering strip 50 in a length direction, the width-constant region 504 is located between the width-varying regions 503, and each width-varying region 503 gradually decreases in width from an end adjacent to the width-constant region 504 to an edge end of the covering strip 50. That is, in the width-constant region 504, a distance between the two ends 501 and 502 of the covering strip 50 in the left-right direction is maximum and equal, while in each width-varying region 503, from the end adjacent to the width-constant region 504 to the edge end of the covering strip 50, the two ends 501 and 502 of the covering strip 50 in the left-right direction gradually approach each other, and the width W1 of the covering strip 50 is minimum at both ends in the length direction of the covering strip 50. In this embodiment, in the length direction of the covering strip 50, a length L1 of each width-varying region 503 is not greater than 1/10 of a length L2 of the width-constant region 504. For instance, if the length L2 of the width-constant region 504 is set to 1 mm, then the length L1 of the width-varying region 503 is set to not exceed 100 µm. Certainly, a length relationship between the length L1 of the width-varying region 503 and the length L2 of the width-constant region 504 is not limited thereto. Further, in this embodiment, the minimum width W1 of the width-varying region 503 may be greater than 0, and the width W1 of the width-constant region 504 is not less than 1/10 of the width W2 of the projecting strip region 303 in the left-right direction. Similarly, both the width-varying region 503 and the width-constant region 504 are symmetrical in the left-right direction with the connecting face X between the first side portion 303a and the second side portion 303b as the mirror surface. In the length direction of the covering strip 50, the width of the covering strip 50 at both ends has a gradual changing structure. The width of the covering strip 50 near input and output ends of the optical waveguide is the smallest, and the width of the covering strip 50 closer to the depletion region is larger, so that the light loss caused by the sudden change of the optical waveguide can be decreased. It should be noted that in this embodiment, although the covering strip 50 is divided into the width-varying regions 503 and the width-constant region 504 according to its different widths and junctions between the width-varying regions 503 and the width-constant region 504 are illustrated by dashed lines in the figure (refer to the dashed lines in FIG. 3), the covering strip 50 may be an integrated structure.

In an embodiment, in the up-down direction, the thickness of the covering strip 50 may be 1 to 500 nm. Certainly, its specific dimension is not limited thereto.

In an embodiment, a spacing between the covering strip 50 and an upper surface of the projecting strip region 303 in an up-down direction is 0 to 500 nm. That is, the covering strip 50 and the upper surface of the projecting strip region 303 may be set in close contact, in which case the spacing between the covering strip 50 and the upper surface of the projecting strip region 303 is 0 nm. Alternatively, as exemplified in the accompanying figures, the spacing between the covering strip 50 and the upper surface of the projecting strip region 303 is not 0 and does not exceed 500 nm. Correspondingly, in this case, the covering strip 50 and the upper surface of the projecting strip region 303 are not in close contact, but instead, the second insulating layer 40 is filled between them.

As mentioned above, the refractive index of the covering strip 50 may be greater than the refractive index of the second insulating layer 40 and the refractive index of the first insulating layer 20. In an embodiment, the second insulating layer 40 and/or the first insulating layer 20 is preferably made of silicon dioxide, and the covering strip 50 can be made of polysilicon, amorphous silicon, single crystal silicon, or silicon nitride, preferably polycrystalline silicon or amorphous silicon. In a variant embodiment, the second insulating layer 40 and/or the first insulating layer 20 may be made of silicon nitride, and the cover strip 50 may be made of polycrystalline silicon, amorphous silicon, or single crystal silicon.

Further, with reference to FIG. 4, the P-type conductive region 31 includes a P-type doped region 311, a P-type medium-doped region 312, and a P-type highly-doped region 313. Herein, the P-type doped region 311 constitutes the first side portion 303a of the projecting strip region 303, while the P-type medium-doped region 312 and the P-type highly-doped region 313 are located in the first flat region 301. The P-type doped region 311, the P-type medium-doped region 312, and the P-type highly-doped region 313 are connected in sequence in the left-right direction, with doping concentrations increasing sequentially.

For instance, optionally, the doping concentration of the P-type doped region 311 may be 10¹⁷ cm⁻³ to 5*10¹⁹ cm⁻³, the doping concentration of the P-type medium-doped region 312 may be 10¹⁸ cm⁻³ to 10²⁰ cm⁻³, and the doping concentration of the P-type highly-doped region 313 may be ≥10¹⁹ cm⁻³.

Similarly, the N-type conductive region 32 includes a N-type doped region 321, a N-type medium-doped region 322, and a N-type highly-doped region 323. Herein, the N-type doped region 321 constitutes the second side portion 303b of the projecting strip region 303, while the N-type medium-doped region 322 and the N-type highly-doped region 323 are located in the second flat region 302. The N-type doped region 321, the N-type medium-doped region 322, and the N-type highly-doped region 323 are connected in sequence in the left-right direction, with doping concentrations increasing sequentially.

For instance, optionally, the doping concentration of the N-type doped region 321 may be 10¹⁷cm⁻³ to 5*10¹⁹ cm⁻³, the doping concentration of the N-type medium-doped region 322 may be 10¹⁸ cm⁻³ to 10²⁰ cm⁻³, and the doping concentration of the N-type highly-doped region 323 may be ≥10¹⁹ cm⁻³.

As shown in FIG. 4, in this embodiment, the P-type doped region 311 and the P-type medium-doped region 312 intersect in the first flat region 301, that is, the P-type doped region 311 not only constitutes the first side portion 303a of the projecting strip region 303, but also extends slightly into the first flat region 301. Similarly, the N-type doped region 321 and the N-type medium-doped region 322 may also intersect in the second flat region 302, that is, the N-type doped region 321 not only constitutes the second side portion 303b of the projecting strip region 303, but also extends slightly into the second flat region 302. Combined with the aforementioned function of the covering strip 50, by minimizing the distance between the P-type medium-doped region 312 and the edge (for example, the position shown by the dashed line Y1 in the figure) of the projecting strip region 303 and the distance between the N-type medium-doped region 322 and the edge (for example, the position shown by the dashed line Y2 in the figure) of the projecting strip region 303, a resistance value of the series-connected resistors (e.g., the first flat region 301 and the second flat region 302) of the doped layer 30 is decreased. The electro-optical bandwidth of the silicon optical modulator 100 may be greatly improved without increasing the optical loss and lowering the modulation efficiency in this way.

As shown in the variant embodiment in FIG. 5, the distance between the P-type medium-doped region 312 and the edge (i.e., the position shown by the dashed line Y1 in the figure) of the projecting strip region 303 and the distance between the N-type medium-doped region 322 and the edge (i.e., the position shown by the dashed line Y2 in the figure) of the projecting strip region 303 may both be 0. That is, the P-type medium-doped region 312 extends to one edge (as shown by the dashed line Y1 in FIG. 5) of the projecting strip region 303, and the N-type medium-doped region 322 extends to the other edge (as shown by the dashed line Y2 in FIG. 5) of the projecting strip region 303. In this way, the resistance value of series-connected resistors (e.g., the first flat region 301 and the second flat region 302) of the doped layer 30 may be greatly decreased. Further, in combination with the effect of the covering strip 50, compared to the related art, the electro-optical bandwidth of the silicon optical modulator 100 may achieve the maximum possible enhancement without increasing the optical loss and lowering the modulation efficiency.

Certainly, under the effect of the covering strip 50, the resistance value of the series-connected resistors (e.g., the first flat region 301 and the second flat region 302) of the doped layer 30 may also be decreased by increasing the doping concentrations of the P-type medium-doped region 312, the N-type medium-doped region 322, the P-type highly-doped region 313, and the N-type highly-doped region 323 as much as possible within a feasible range in the present application. In this way, the electro-optical bandwidth may be improved as much as possible without increasing the optical loss and lowering the modulation efficiency.

In view of the foregoing, the beneficial effects of an embodiment of the present application lie in: for the same doped layer, by adding a covering strip compared to without a covering strip, the optical loss of the doped layer may be significantly reduced, and the modulation efficiency may basically not be adversely affected. As such, the resistance value of the series-connected resistors of the doped layer may be decreased as much as possible by, for example, increasing the doping concentrations of the flat regions, reducing the spacing between the medium- to highly-doped regions and the edge of the projecting strip region, etc., and the effect of enhancing the electro-optic bandwidth as much as possible may thus be achieved without adverse effects.

It should be understood that although the specification is described according to the embodiments, not every embodiment includes only one independent technical solution. This description of the specification is only for the sake of clarity. A person having ordinary skill in the art should regard the specification as a whole. The technical solutions in each embodiment may also be appropriately combined to form other embodiment that can be understood by a person having ordinary skill in the art.

The series of detailed descriptions listed above are only specific descriptions of feasible implementations of the present invention, and they are not intended to limit the protection scope of the present invention. All equivalent embodiments or modifications made without departing from the technical spirit of the present invention shall be included within the protection scope of the present invention.

## Claims

1. A silicon optical modulator comprising a substrate, a first insulating layer, a doped layer, and a second insulating layer stacked from bottom to top, wherein
the doped layer comprises a first flat region, a projecting strip region, and a second flat region sequentially arranged in a left-right direction,
the projecting strip region has a first side portion and a second side portion, the first side portion is connected to the first flat region to form a first conductive region of the doped layer, the second side portion is connected to the first flat region to form a second conductive region of the doped layer, and the first side portion and the second side portion are connected to form a junction capacitor of the doped layer, **characterized in that**
the silicon optical modulator further comprises a covering strip located above the projecting strip region and covering a connecting face between the first side portion and the second side portion, and a refractive index of the covering strip is greater than a refractive index of the second insulating layer and a refractive index of the first insulating layer.

2. The silicon optical modulator according to claim 1, **characterized in that** the covering strip is left-right symmetrical with the connecting face between the first side portion and the second side portion as a mirror surface.

3. The silicon optical modulator according to claim 1, **characterized in that** a width of the covering strip in the left-right direction is not less than 1/10 of a width of the projecting strip region in the left-right direction.

4. The silicon optical modulator according to claim 3, **characterized in that** two ends of the covering strip in the left-right direction are aligned with two ends of the projecting strip region or extend beyond the two ends of the projecting strip region.

5. The silicon optical modulator according to claim 3, **characterized in that** the covering strip comprises width-varying regions and a width-constant region, the width-varying regions are located at two ends of the covering strip in a length direction, the width-constant region is located between the width-varying regions, and the width-varying regions gradually decreases in width from ends adjacent to the width-constant region to edge ends of the covering strip.

6. The silicon optical modulator according to claim 1, **characterized in that** in an up-down direction, a thickness of the covering strip is 1 to 500 nm, a thickness of the projecting strip region is 100 to 500 nm, and a thickness of the first flat region and a thickness of the second flat region are respectively 1/10 to 4/5 of the thickness of the projecting strip region.

7. The silicon optical modulator according to claim 1, **characterized in that** a spacing between the covering strip and an upper surface of the projecting strip region in an up-down direction is 0 to 500 nm, and
when the spacing is not 0, a portion of the second insulating layer is filled between the covering strip and the upper surface of the projecting strip region.

8. The silicon optical modulator according to claim 1, **characterized in that** a material of the second insulating layer and/or a material the first insulating layer is silicon dioxide, and
a material of the covering strip is set to polycrystalline silicon, amorphous silicon, single crystal silicon, or silicon nitride.

9. The silicon optical modulator according to claim 1, **characterized in that** the first conductive region is a P-type conductive region, and the second conductive region is an N-type conductive region.

10. The silicon optical modulator according to claim 9, **characterized in that** the P-type conductive region comprises a P-type doped region constituting the first side portion and a P-type medium-doped region and a P-type highly-doped region located in the first flat plate region, and the P-type doped region, the P-type medium-doped region, and the P-type highly-doped region are sequentially connected in the left-right direction and doping concentrations increase sequentially,
the N-type conductive region comprises a N-type doped region constituting the second side portion and a N-type medium-doped region and a N-type highly-doped region located in the second flat plate region, and the N-type doped region, the N-type medium-doped region, and the N-type highly-doped region are sequentially connected in the left-right direction and doping concentrations increase sequentially.
